Europäisches Patentamt

European Patent Office

Office européen des brevets

(11) Publication number: **0 345 035**
A2

(12) # EUROPEAN PATENT APPLICATION

(21) Application number: **89305468.4**

(22) Date of filing: **31.05.89**

(51) Int. Cl.⁴: **G 06 F 15/20**

(30) Priority: **31.05.88 JP 134116/88**

(43) Date of publication of application:
**06.12.89 Bulletin 89/49**

(84) Designated Contracting States: **DE FR GB IT**

(71) Applicant: **BROTHER KOGYO KABUSHIKI KAISHA**
**35, 9-chome, Horita-dori Mizuho-ku**
**Nagoya-shi, Aichi-ken (JP)**

(72) Inventor: **Hirata, Keiichi c/o Brother Kogyo K.K.**
**35, Horita-dori 9-chome Mizuho-ku**
**Nagoya-shi Aichi-ken (JP)**

**Kawakami, Yasushi c/o Brother Kogyo K.K.**
**35, Horita-dori 9-chome Mizuho-ku**
**Nagoya-shi Aichi-ken (JP)**

**Kawasumi, Atsuko c/o Brother Kogyo K.K.**
**35, Horita-dori 9-chome Mizuho-ku**
**Nagoya-shi Aichi-ken (JP)**

**Kamisaka, Mizuho c/o Brother Kogyo K.K.**
**35, Horita-dori 9-chome Mizuho-ku**
**Nagoya-shi Aichi-ken (JP)**

**Oishi, Minoru c/o Brother Kogyo K.K.**
**35, Horita-dori 9-chome Mizuho-ku**
**Nagoya-shi Aichi-ken (JP)**

**Furukawa, Akihiro c/o Brother Kogyo K.K.**
**35, Horita-dori 9-chome Mizuho-ku**
**Nagoya-shi Aichi-ken (JP)**

(74) Representative: **Senior, Alan Murray et ai**
**J.A. KEMP & CO 14 South Square Gray's Inn**
**London WC1R 5EU (GB)**

(54) **Text processing device with character modifying function.**

(57) In a text processing device with character modifying
function, provided are means for designating a point in a text
file, means for searching a selectable predetermined code in
the text file, and means for saving the addresses between the
designated point and the searched point.

Thus, it becomes possible to designate the area being
separated by the desired code, for example, space code, period
code etc. with a single key operation.

Further, means for granting the desired character modifying
symbol code previously selected to each of the codes included
in the designated area, is provided.

FIG. 3(A)

EP 0 345 035 A2

**Description**

## Text Processing Device with Character Modifying Function

This invention relates to a text processing device with a character modifying function, more particularly, to a device having a function capable of designating a text area being separated by a predetermined code (for example, space code or page feed code etc.) with a simple and quick operation, and further granting the desired character modifying information (for example, underline or boldface type etc.) to the codes existing on the designated area.

There have been some text processing devices such as word processors and electronic typewriters that are provided with a function capable of designating a text area separated by a certain code and a character modifying function such as underline, boldface (typing with thick line), superscript (lift halfway above an ordinary typing position), subscript (drop halfway below an ordinary typing position), and strikeover of erase line etc. In carrying out such text area designation, there is a known process of moving a cursor along a series of character strings by operating a cursor key provided on a keyboard so that an actually scanned area by the cursor is specified as the designated area. After the designation above described, the characters included in the designated area are simultaneously, for example, moved to or copied on an another position in the text file or deleted with a respective key operation. Further, the above described character modifying operation is carried out for the characters in the designated area. There has been another method of specifying the designated area in which the cursor is actually placed on the start and end points of the area to be designated in case, for example, the area to be designated is existing across a plurality of pages, or a large area.

However, the designated areas usually consist of a particular unit of text such as one or more words, lines, paragraphs and pages. As a result, the above described method of using the cursor in the area to be designated area has often suffered inconvenience in operation. In particular, when the area to be designated is a word or a line, it has been difficult to stop the cursor exactly at the end of the word or the line after its continuous movement. When the area to be designated exists across a plurality of paragraphs or pages, cursor movement operation has taken an long time .

On the other hand, the method of setting the start and end pointsof the area to be designated with the cursor has an advantage that the cursor moving operation can be accomplished in a shorter length of time. However, this is also associated with a trouble of more frequent key operation. It is to be noted that the similar problem exists in a system in which a print head on a carriage is moved instead of the cursor relative to a printing medium.

It is therefore an object of the invention to provide an improved text processing device having a function for text area designation and a function for granting the desired character modifying information to the characters included in the designated area with a more easy and simple operation.

As a result, the text processing device according to the invention has a function capable of easily designating the desired areas in a text file data when an operator wants to move the data included in the area to an another portion of the text file, to copy the data over to another area, and to delete all of the data in the area. Therefore, the operator is able to easily execute the above operations.

According to the invention, there is provided a text processing device comprising memory means for storing codes corresponding to text file data including a plurality of character strings and represent means for representing the text file data, the text processing device further comprising; designate means for designating a represented point in the text file data; select means for selecting at least one of the codes stored in the memory means; search means for beginning search operation of the code selected by the select means from the represented point designated by the designate means; and area determine means for determining a designate area based upon the represented point designated by the designate means.and a result of the search operation executed by the search means.

The accompanying drawings are given by way of example only. In the drawings:

Fig. 1 is a perspective external view of the elcetronic typewriter embodying the present invention;

Fig. 2 is an elctrical block diagram illustrating a configuration of the typewriter shown in Fig. 1;

Fig. 3(A) through 3(E) are flow charts of programs executed by the typewriter shown in Fig. 1; and

Fig. 4(A) through 6(B) are display examples when processings for the area designation and for the character modification are executed.

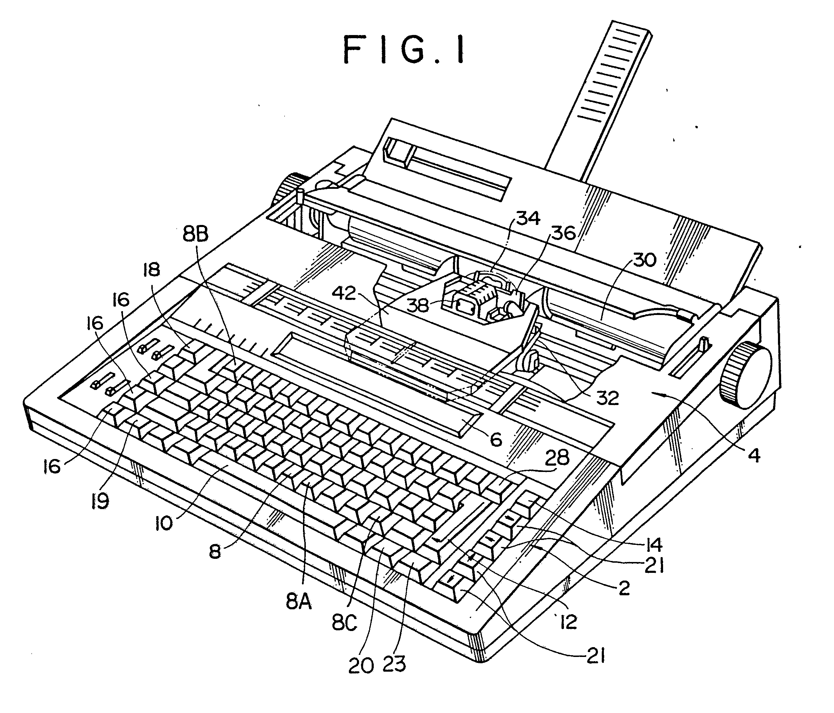

Fig. 1 shows an electronic typewriter as a text processing device embodying the present invention, which is provided with a keyboard 2 and a print mechanism 4, between which a liquid crystal display 6 for displaying a predetermined number of lines is provided.

The keyboard 2 includes a plurality of character keys 8 such as alphabetical keys 8A, numeric keys 8B and a period key 8C for inputting codes corresponding to each of the keys as well as a plurality of function keys including a space key 10, a return key 12, a page feed key 14 for inputting function codes corresponding to each of the keys, both are used for preparing or revising text files. Further, character modifying keys 16 for inputting a character modifying information (underline, boldface typing etc.) code to be granted to the codes existing in a predetermined area of the text file, search key 18 for searching the selected code in the text file copy key 19 for setting copy mode, move key 20 for setting move mode, cursor movement keys 21 for moving a cursor 22 in the liquid crystal panel 6, and execution key 23 for executing a processing in accordance with the set mode, are provided on the keyboard 2.

The print mechanism 4 comprises a platen 30 serving as a sheet feed roller and a carriage 32 movable along the platen 30. On the carriage 32 mounted are a wheel cassette 36 accommodating a print wheel 34, an well-known print hammer (not shown) and a solenoid 38 for driving the print hammer, and a ribbon cassette 42 housing therin a print ribbon. The type responsive to a key input is selected by a rotation of the print wheel 34 and is printed on a print sheet by hammering the print hammer, whereupon the carriage 32 is moved by one character.

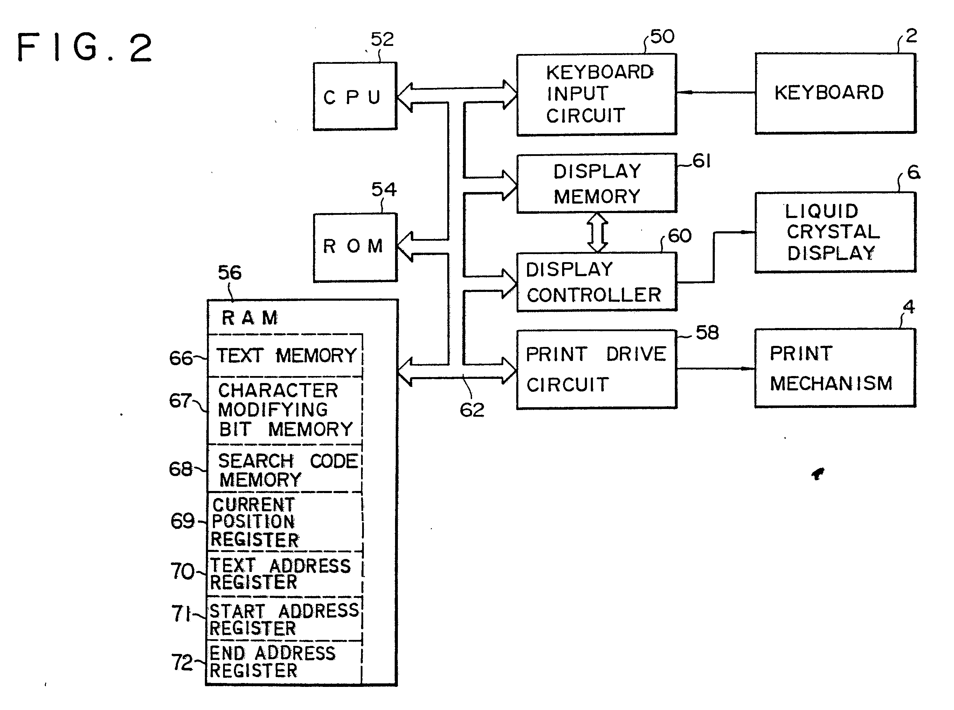

A configuration and an operation of a control circuit for the electronic typewriter according to this embodiment are described with reference to the block diagram shown in Fig. 2.

The keyboard 2 is electrically connected to a known CPU (Central Processing Unit) 52 through a keyboard input circuit 50 so that the codes corresponding to the keys operated on the keyboard 2 are transmitted to the CPU 52. The CPU 52 is also electrically connected to a ROM (Read Only Memory) 54, a RAM (Random Access Memory) 56, a printer driver 58, a display controller 60 and a display memory 61, all interconnected by means of a common bus 62.

ROM 54 contains a control programs stored to implement operation control of the electronic typewriter acocrding to the embodiment. RAM 56 contains a text memory 66 for storing text file data, a character modifying bit memory 67, a search code memory 68, current position register 69 for temporarily storing an address data corresponding to the current cursor 22 position, text address register 70 for storing an address data corresponding to the data read out position of the text memory 66, start address register 71 for storing an address data of the text address register 70 when a search operation is started, end address register 72 for storing an address data of the text address register 70 when a search operation is terminated and other counters and registers having areas for storing various data. The functions and operations of the memory 67 and 68 as mentioned above will be described later. A value of the current position register 69 is identical with the value of the text address register 70.

The printer driver 58 controls an well-known driving motor (not shown) for driving the carriage 32 and the print wheel 34 in response to the type select signal corresponding to the carriage moving signal and characters to be printed which are transmitted from the CPU 52.

The display controller 60 is a unit for representing characters and character modifying symbols (underline etc.) on the liquid crystal display 6. It is provided with an well-known character generator not shown, for storing a number of character patterns corresponding to characters and is connected to the liquid crystal display 6.

The display memory 61 is a memory for storing the codes corresponding to the characters displayed on the liquid crystal display 6, and is connected to the display controller 60 by means of the common bus 62.

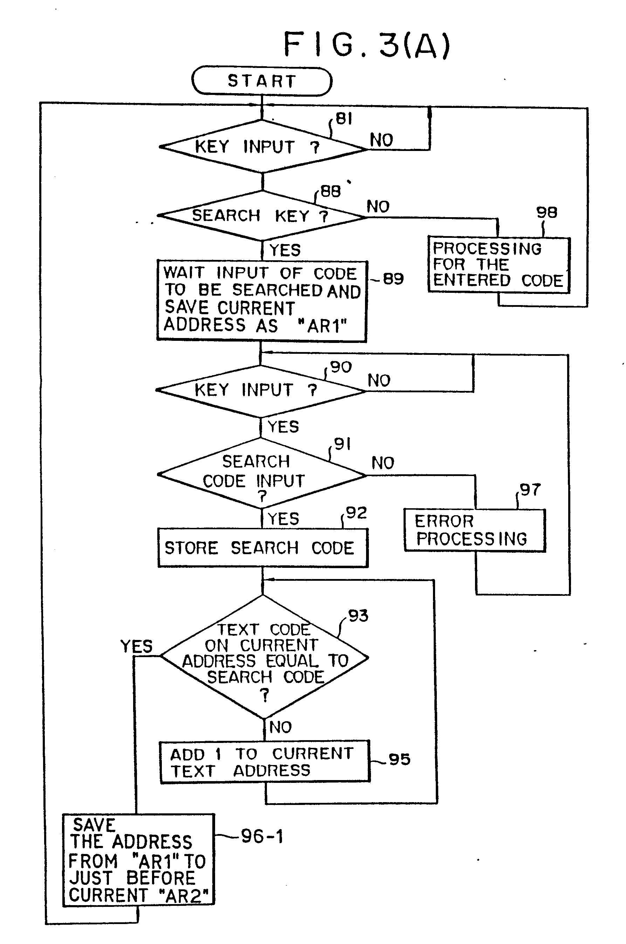

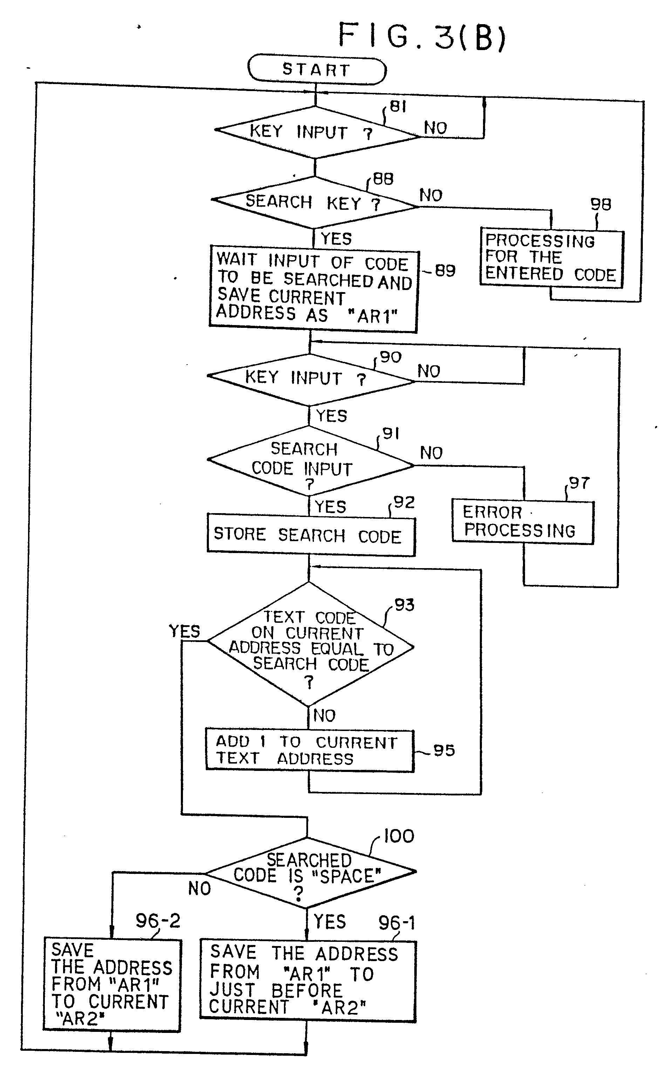

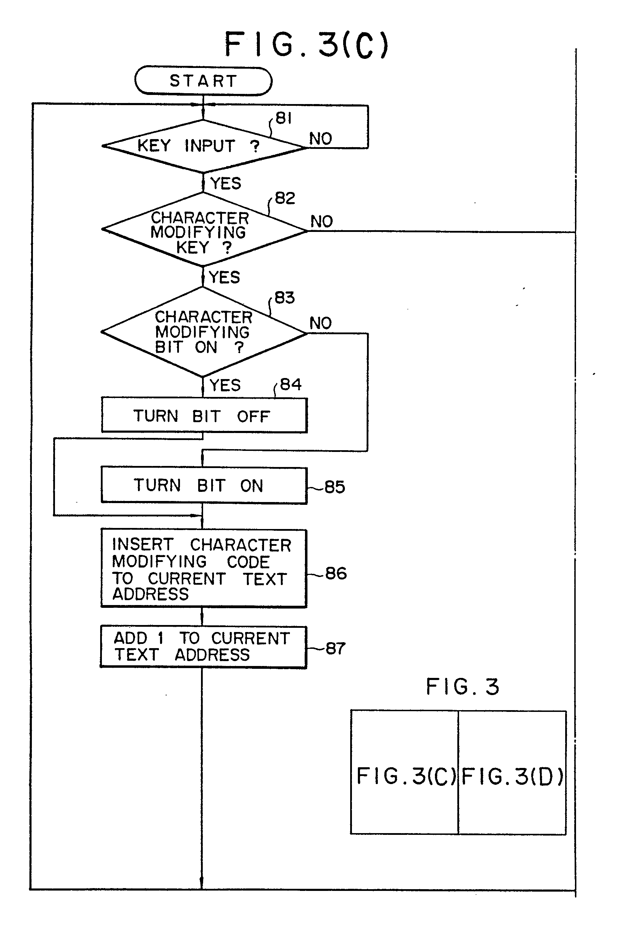

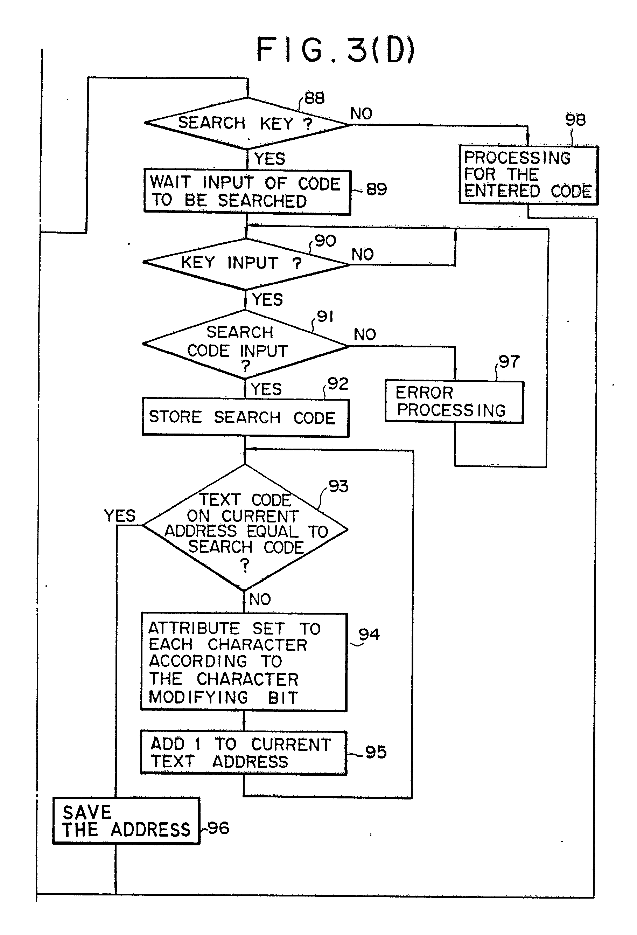

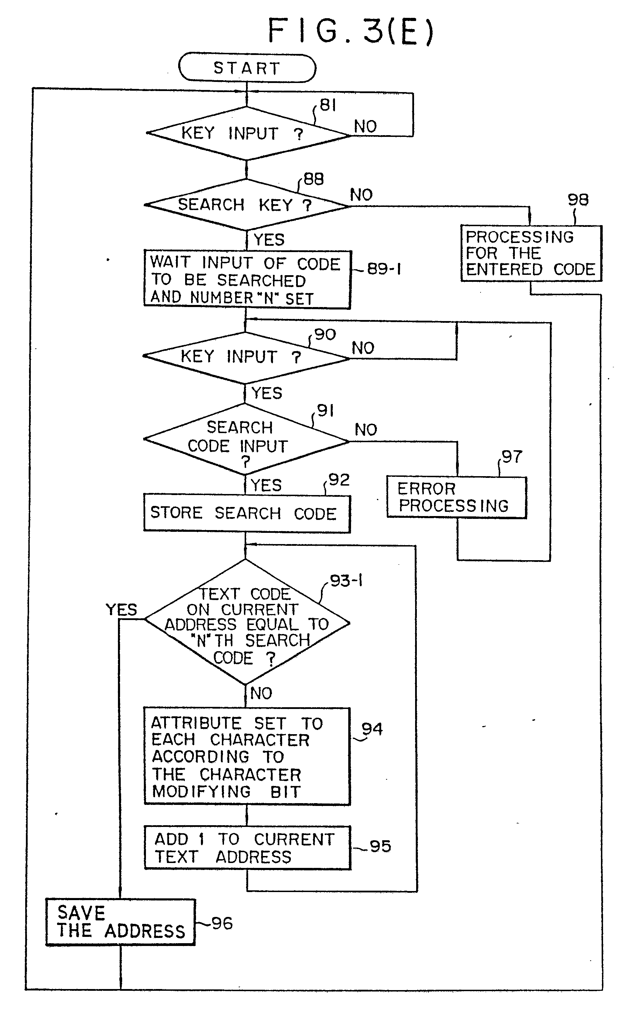

Explanation is now given for how operation for area designation is controlled with a control program for designating the desired address area to be executed a copy operation, move operation and delete operation etc. stored in the ROM 54 with reference to the flow chart shown in Fig. 3(A) and (B), and further for character modifying information granting operation to be executed to the characters existing in the designated area with reference to the flow charts shown in Fig. 3(C) and (D).

After setting the desired area designation mode, for example, copy mode by depressing the copy key 19 or move mode by depressing the move key 20, a series of key operations are executed as described below.

In Fig. 3(A), when a key on the keyboard 2 is depressed with a processing in step 81, it is examined whether or not the inputted code by the key depression is a code corresponding to the search key 18. If the code input is not through the search key 18, step 98 for any processing corresponding to the inputted code is executed. For example, the cursor 22 is moved in the text file data by means of operations of the cursor movement keys 21. If the depressed key is the search key 18, processings 89 through 96 are executed.

In step 89, after an address data of the text address register 70 corresponding to the current cursor position in the display 6 are stored in the start address register 71, a plurality of data each corresponding to the code included in the text file are displayed on the liquid crystal display 6. An operator selects one of the displayed data by depressing the key corresponding to the data, further, the text area between the points at which the search key 18 is depressed and the selected code exists will be designated as the designation area and the addresses corresponding to the designated area will be saved, as described later.

In steps 90 and 91, when the operator depresses a certain key in accordance with an indication displayed on the liqid crystal display 6, it is examined whether or not the inputted code by the key depression is one of the predetermined searchable codes, for example, space code, punctuation code, comma code, period code, return code, page feed code and other codes, which are previously registered as the codes used to separate the text data code. If the inputted code is one of the searchable codes, the code (referred to as search code below) is stored in the search code memory 68 in step 92. If the inputted code is not the search code, error processing takes place in step 97 in responce to a buzzer or like warning signal to inform the operator that a key corresponding to the unsearchable code was depressed.

After the inputting and storing of the searchable code, well-known search operation is executed (see Fig. 3(A)). Further, it is examined, in step 93, whether or not the text data code at the current address of the text address corresponding to the current cursor 22 position (at the time of inputting the search code) is equal to the address corresponding to the search code. This is carried out to check whether the position of the text address is at the just after position of the end terminal of the designation area.

If the text address is not at the just after position of the end terminal of the designation area, it is determined "NO" in step 93 so that the processings in step 95 are repeated until the search code is found in the text data code.

In step 95, the address data of the current text address register 70 and the current position register 69 are both respectively incremented, and the processing returns to step 93.

When the end terminal of the designation area is found, or after the search operation is finished on the point at which the selected search code is located, it is determined "YES" in step 93 so that the area designating operation is terminated to store the address data substracted by "1" from the address data of the text address register 70 into the end address register 72, while the data included between the address data of the start address register 71 and the end address register 72 are displayed in reverse colour. (see step 96-1 of Fig. 3(B)). Further, the processing returns to step 81.

After the area designating operation above described was terminated, by depressing the execution key 23, for example, if the current mode is move mode, the codes included in the designated area are moved to an another position of the text file simultaneously as they are.

Further, by depressing a step key 28, the search operation as shown in step 93 and 95 is executed again in accordance with the search code having been already stored in step 98, from the current cursor 22 position. When the code searched again as described above is found in the text file, the subtracted address data by "1" from the address data of the text address register 70 is stored in the end address register 72, and the data included between the start address register 71 and the end address register 72 are displayed in reverse colour as the data in the designated area, and finally, the processing returns to step 81.

Accordingly, the designated area is increased by a predetermined unit (i.e. a unit bounded by the two desired search codes) with a simple operation.

In the above first embodiment, the area between the address data corresponding to the position at which the cursor 22 primarily exist (i.e. the moment when the search key 18 has been depressed) and the position just before the search code is found, is determined as the designated area. It may be considered that the area between the position at which the search code primarily exist and secondary exist, is determined as the designated area and displayed in reverse colour, as the second embodiment. In this case, as shown in Fig. 3(B), in step 96-2 instead of step 96-1 of Fig. 3(A), the address data of the text address register 70 are stored in the end address register 72 as they are. In other words, the data included in the area designated by means of the search operation are displayed in reverse colour. The search operation is started by depressing the search key 18. When an operator wants to designate an word halfway, the above operation for designating an area is effective.

Further, as shown in Fig. 3(B), it may be considered as the third embodiment, that step 100 examines whether the search code is space code or not, and the processing goes to 96-1 in an affirmative determination, while goes to 96-2 in a negative determination.

In other words, the contents of the third embodiment are identical with the contents of the first embodiment in case that the search code is space code, while with the second embodiment in other case. With employing the third embodiment, the area bounded by a word is determined as an designated area when the space code is selected as the search code, and the area bounded by a sentence or a page is respectyively determined when period code or page feed code is selected.

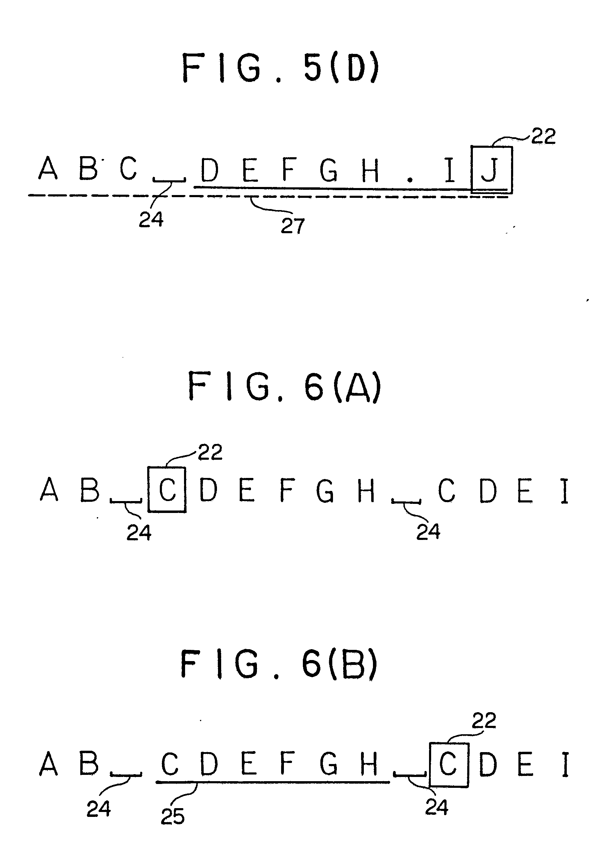

Further, the keys for selecting the search code are not necessarily to be the function keys such as the space key or the period key as described above, but may be alphabetical numeric, and other characteristic keys. In this case, it is possible to provide a program with so-called word search function in which a character string such as word or sentence is inputted as an end terminal of the designated area, as illustrated in Fig. 6(A) and (B). In Fig. 6(A) and (B), the character string "CDE" is inputted as the end terminal of the designated area. In other words, it is possible to replace the steps 90, 91, 92, of Fig. 3(A) with a plurality of steps for inputting data to be searched and beginning search operation of the inputted data by depressing the search key 23. In this case, the cursor 22 is moved to the beginning of the data to be searched or the end of the data.

Further, it may be considered that the search operation is executed toward the beginning of the text with a diretion key.

It is possible to provide a storage area for storing the data of area designation in RAM 56 as shown in UK Patent Application GB2192740.

As the improvement of the function above described, it may be considered that the desired character modifying information, for example, underline, boldface type etc. is granted to the characters included in the designated area.

An another embodiment of the present invention having a function capable of granting the desired character modifying information to the characters will be described with reference to Fig. 3(C) and (D).

When a key depressed on the keyboard 2 with the processings in step 81 and 82, it is examined whether or not the inputted code by the key operation is through one of the character modifying keys 16. The character modifying keys 16 refers to the keys for specifying the types of character modification, such as underline, boldface, superscript and subscript etc.

If the depressed key on the keyboard 2 is one of the character modifying keys 16 (step 82, "YES"), it is examined in step 83 whether or not a character modifying bit, or a flag corresponding to each of the character modifying keys 16, is on. If a character modifying bit responsive to the key depression is on, the character modifying bit is switched to off in step 84, while if it is off, it is switched to on in step 85. In other words, on and off operation takes place every time when the character modifying key is depressed. One of these keys is depressed (step 85) and the character modifying operation corresponding to the depressed key is executed, and the key is depressed (step 84) when the character modifying operation is to be terminated as described later. In both cases, a character modifying symbol code is inserted into the text file memory 66.

Thus, in step 86, a code corresponding to the key depression is inserted into the text address corresponding to the data of the current text address register 70, and each successive data are shifted backward respectively, then, in step 87, "1" is added to the address data of the text address register 70 for updating according to the code insertion.

When it is determined that the inputted code through the keyboared 2 is not the character modifying code, it is examined whether or not the inputted code is corresponding to the search key 18 (step 88). If it is determined that the inputted code is not corresponding to the search key 18, any processing responsive to the inputted code is executed in step 98. On the other hand, in case that the inputted code is the search code, the area designation proccesings are executed from step 89 to 93, similar to the processings shown in Fig. 3(A). Furthermore, in step 94, the character modifying code is granted to each of the codes included in the designated area. The character modifying code to be granted is a code whose character modifying bit is set into "ON" state in step 85.

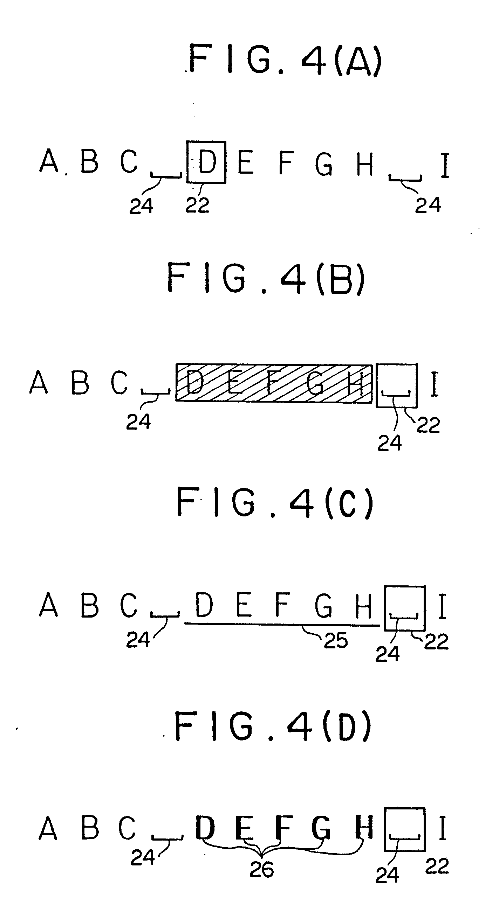

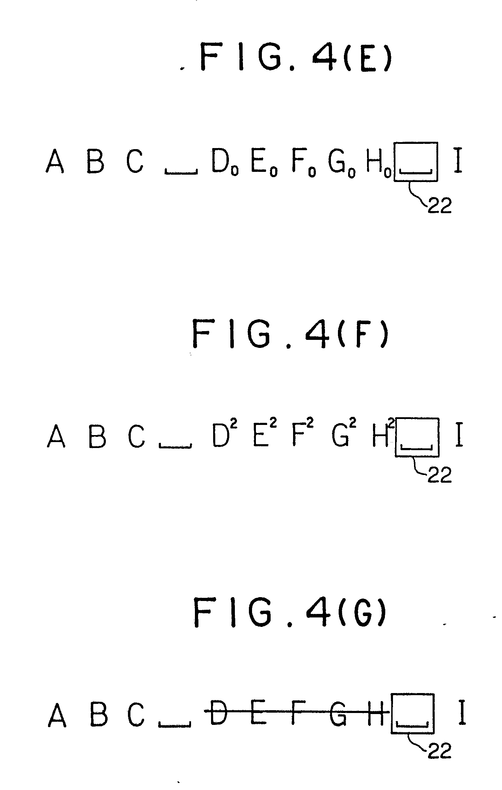

Fig. 4(A) and (C) through (G) are display examples of the area designating operation and the character modifying operation for the characters in the designated area. In the drawings symbol "⌐⌐" represents a space data 24.

In steps 81 through 87 of Fig. 3(C), the character modifying information to be granted is determined. During these processings, a cursor 22 or the position corresponding to the address data of the text address register 70 is, for example, located on the character "D" as shown in Fig. 4(A). In steps 88 through 92 of Fig. 3(C), one of search codes is selected. In Fig. 4(C) through (G), the space code is selected as the search code separating the text data code. If the character modifying information to be granted is, for example, underline, the characters "D" through "H" are modified by the underline 25 as illustrated in Fig. 4(C). Further, if the information to be granted is subscript or superscript, the number of subscript or superscript is simultaneously determined in step 82 with the character modifying information. As a result, the characters in the designated area are granted the desired number as a subscript or a superscript, as illustrated in Fig. 4(E) and (F). When the determined information is boldface type or strikeover of erase line, the characters are modified as respectively illustrated in Fig. 4(D) or (G).

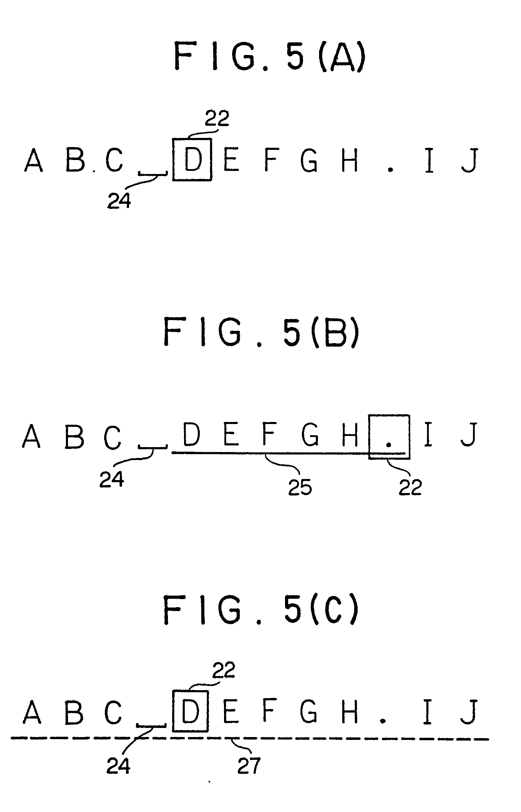

As the selected search code, any codes other than the space are considered. If period code is selected as the search code, the characters are modified as illustrated in Fig. 5(A) and (B), and page feed code is selected, the characters are modified as illustrated in Fig. 5(C) and (D). Numeral 27 shows the end of a page. In other words, when period is selected, character modification for one sentence can be executed by specifying the end terminal of the designated area by depressing the period key, and character modification for one page can be executed by depressing the page feed key both are provided, not shown, on the keyboard 2.

As shown in Fig. 3(D), it is further possible to input the desired number "N" in step 89-1. In this case, the search operation for searching the selected search code is continued till the "N"th code is found in step 93-1 throug 95.

The present invention is also applicable to a typewriter or a similar device provided with no display screen.

## Claims

1. A text processing device comprising memory means for storing codes corresponding to text file data including a plurality of character strings and represent means for representing the text file data, said text processing device further comprising;
designate means for designating a represented point in said text file data;
select means for selecting at least one of the codes stored in said memory means;
search means for beginning search operation of said code selected by said select means from the represented point designated by said designate means; and
area determine means for determining a designated area based upon the represented point designated by said designate means and the result of the search operation executed by said search means.

2. The text processing device according to claim 1 wherein said area determine means determines an area between the represented point designated by said designate means and the point just before the point
at which the selected code is found by the search operation executed by said search means, or the point at which the selected code is found.

3. The text processing device according to claim 1 or 2 which further comprises save means for saving the start address and the end address of the designated area determined by said area determine means.

4. The text processing device according to claim 3 which further comprises modify information designate means for designating modified information; and
grant means for granting the code corresponding to the information designated by said modify information designate means to the codes included between the start address and end address saved in said save means.

5. The text processing device according to claim 4 wherein said modified information designated by said modify information designate means is an underline, or boldface type.

6. The text processing device according to any preceding claim which further comprises distinguish means for controlling said represent means so as to represent the data included in the area determined by said area determine means with distinction from the data included in the area other than the determined area.

7. The text processing device according to claim 6 wherein said distinguish means controls said represent means so as to represent the data included in the area determined by said area determine means in reverse colour.

8. The text processing device according to any preceding claim wherein said code selected by said select means is space code, or period code, or page feed code.

9. The text processing device according to any preceding claim wherein said select means further selects a desired number of codes succeeding the selected codes and said search means further searches the codes selected by said select means.

10. The text processing device according to any preceding claim which further comprises number set means for setting the desired number and wherein said search means further searches the code selected by select means till the code is searched a number of times corresponding to the number set by said number set means.

11. A text processing device comprising memory means for storing codes corresponding to text file data including a plurality of character strings and represent means for representing the text file data, said text processing device further comprising;
designate means for designating a represented point in said text file data;
modify information designate means for designating a modify information;
select means for selecting at least one of the codes stored in said memory means;
search means for searching said code selected by said select means from the represented point designated by said designate means;
area determine means for determining a designate area between the represented point designated by said designate means and the point at which the code selected by said select means is found by said search means; and
grant means for granting the code corresponding to the information designated by said modify information designate means to the codes included in the area determined by said area determine means.

12. The text processing device according to claim 11 wherein said modify information designated by said modify information designate means is underline.

13. The text processing device according to claim 11 or 12 wherein said code selected by said select means is space code.

FIG. 1

# FIG. 2

CPU — 52

ROM — 54

RAM — 56
- TEXT MEMORY — 66
- CHARACTER MODIFYING BIT MEMORY — 67
- SEARCH CODE MEMORY — 68
- CURRENT POSITION REGISTER — 69
- TEXT ADDRESS REGISTER — 70
- START ADDRESS REGISTER — 71
- END ADDRESS REGISTER — 72

KEYBOARD INPUT CIRCUIT — 50

KEYBOARD — 2

DISPLAY MEMORY — 61

DISPLAY CONTROLLER — 60

LIQUID CRYSTAL DISPLAY — 6

PRINT DRIVE CIRCUIT — 58

PRINT MECHANISM — 4

62

EP 0 345 035 A2

# FIG. 3(A)

```
                    ┌──────────┐
                    │  START   │
                    └────┬─────┘
                         │
                    ╱────┴────╲          81
                   ╱           ╲            NO
                  ╱ KEY INPUT ? ╲──────────────────┐
                   ╲           ╱                    │
                    ╲────┬────╱                     │
                         │                          │
                    ╱────┴────╲         88          │
                   ╱           ╲           NO       │
                  ╱ SEARCH KEY ?╲───────────┐       │
                   ╲           ╱            │       │
                    ╲────┬────╱             ▼       │
                     YES │           ┌──────────┐   │
          ┌──────────────┴────────┐  │PROCESSING│98 │
          │WAIT INPUT OF CODE      │89│FOR THE   │   │
          │TO BE SEARCHED AND      │  │ENTERED   │   │
          │SAVE CURRENT            │  │CODE      │   │
          │ADDRESS AS  "AR1"       │  └────┬─────┘   │
          └──────────────┬────────┘       │         │
                         │                │         │
                    ╱────┴────╲      90    │         │
                   ╱           ╲     NO     │         │
                  ╱ KEY INPUT ? ╲───────────┼────────┤
                   ╲           ╱            │         │
                    ╲────┬────╱             │         │
                     YES │                  │         │
                    ╱────┴────╲     91       │         │
                   ╱  SEARCH   ╲    NO        │         │
                  ╱ CODE INPUT  ╲────────┐   │         │
                  ╲     ?       ╱        │   │         │
                   ╲────┬──────╱         ▼   │         │
                    YES │   92      ┌────────┐97        │
          ┌─────────────┴──────┐    │ERROR    │          │
          │STORE SEARCH CODE    │    │PROCESSING│         │
          └─────────────┬──────┘    └────┬────┘          │
                        │◄───────────────┘               │
                    ╱───┴────╲      93                    │
           YES     ╱ TEXT CODE╲                           │
        ┌─────────╱ON CURRENT  ╲                          │
        │         ╲ADDRESS EQUAL TO                       │
        │          ╲SEARCH CODE╱                          │
        │           ╲   ?    ╱                            │
        │            ╲──┬──╱                              │
        │            NO │                                 │
        │      ┌────────┴────────┐                        │
        │      │ADD 1 TO CURRENT  │95                      │
        │      │TEXT  ADDRESS     │                        │
        │      └────────┬────────┘                        │
        │               └────────────────────────┘       │
        │                                                 │
   ┌────┴────────┐                                        │
   │SAVE          │96-1                                    │
   │THE ADDRESS   │                                        │
   │FROM "AR1" TO │                                        │
   │JUST BEFORE   │                                        │
   │CURRENT "AR2" │                                        │
   └────┬─────────┘                                        │
        └────────────────────────────────────────────────┘
```

# FIG. 3(B)

START

81 KEY INPUT ? — NO

88 SEARCH KEY ? — NO → 98 PROCESSING FOR THE ENTERED CODE

YES

~89 WAIT INPUT OF CODE TO BE SEARCHED AND SAVE CURRENT ADDRESS AS "AR1"

90 KEY INPUT ? — NO

YES

91 SEARCH CODE INPUT ? — NO → 97 ERROR PROCESSING

YES

92 STORE SEARCH CODE

93 TEXT CODE ON CURRENT ADDRESS EQUAL TO SEARCH CODE ?

YES

NO

95 ADD 1 TO CURRENT TEXT ADDRESS

100 SEARCHED CODE IS "SPACE" ?

NO

YES

96-2 SAVE THE ADDRESS FROM "AR1" TO CURRENT "AR2"

96-1 SAVE THE ADDRESS FROM "AR1" TO JUST BEFORE CURRENT "AR2"

# FIG. 3(C)

```
          ( START )
              │
        ┌─────┴──────────────────────┐
        │       ╱────81────╲          │
        │      ╱ KEY INPUT ? ╲──NO────┤
        │      ╲             ╱         │
        │       ╲───────────╱          │
        │          │YES                │
        │      ╱────82─────╲           │
        │     ╱ CHARACTER   ╲          │
        │    ╱  MODIFYING    ╲──NO──────────────→
        │    ╲   KEY ?      ╱           │
        │     ╲────────────╱            │
        │          │YES                 │
        │      ╱────83─────╲            │
        │     ╱ CHARACTER   ╲           │
        │    ╱  MODIFYING    ╲──NO──┐   │
        │    ╲  BIT ON  ?   ╱       │   │
        │     ╲────────────╱        │   │
        │          │YES   84        │   │
        │   ┌──────────────────┐    │   │
        │   │  TURN  BIT  OFF  │    │   │
        │   └──────────────────┘    │   │
        │          │                │   │
        │   ┌──────┴───────────┐    │   │
        │   │  TURN  BIT  ON   │────85  │
        │   └──────────────────┘        │
        │          │                    │
        │   ┌──────────────────┐        │
        │   │ INSERT CHARACTER │        │
        │   │ MODIFYING  CODE  │        │
        │   │ TO CURRENT TEXT  │──86    │
        │   │ ADDRESS          │        │
        │   └──────────────────┘        │
        │          │                    │
        │   ┌──────────────────┐        │
        │   │ ADD 1 TO CURRENT │──87    │
        │   │ TEXT  ADDRESS    │        │
        │   └──────────────────┘        │
        │          │                    │
        └──────────┴────────────────────┘
```

## FIG. 3

| FIG. 3(C) | FIG. 3(D) |
|-----------|-----------|

# F I G . 3(D)

```
                    ┌──────────────┐
                    │  SEARCH KEY ? │ ──88  NO ──────────► ┌──────────────┐
                    └──────────────┘                       │ PROCESSING   │ ──98
                          YES                               │ FOR THE      │
                    ┌──────────────┐                        │ ENTERED CODE │
                    │ WAIT INPUT OF CODE │ ──89             └──────────────┘
                    │ TO BE SEARCHED │
                    └──────────────┘
                    ┌──────────────┐
                    │  KEY INPUT ? │ ──90  NO
                    └──────────────┘
                          YES
                    ┌──────────────┐
                    │  SEARCH CODE INPUT ? │ ──91  NO ──► ┌──────────────┐
                    └──────────────┘                       │ ERROR        │ ──97
                          YES                               │ PROCESSING   │
                    ┌──────────────┐ ──92                  └──────────────┘
                    │ STORE SEARCH CODE │
                    └──────────────┘
            YES ◄── ┌──────────────┐ ──93
                    │ TEXT CODE ON CURRENT │
                    │ ADDRESS EQUAL TO     │
                    │ SEARCH CODE ?        │
                    └──────────────┘
                          NO
                    ┌──────────────┐ ──94
                    │ ATTRIBUTE SET TO     │
                    │ EACH CHARACTER       │
                    │ ACCORDING TO         │
                    │ THE CHARACTER        │
                    │ MODIFYING BIT        │
                    └──────────────┘
                    ┌──────────────┐ ──95
                    │ ADD 1 TO CURRENT     │
                    │ TEXT ADDRESS         │
                    └──────────────┘
        ┌──────────────┐
        │ SAVE THE ADDRESS │ ──96
        └──────────────┘
```

# FIG. 3(E)

```
                    ( START )
                        │
                        ▼
              ┌─────────────────┐  81
              │   KEY INPUT ?    │───NO──┐
              └─────────────────┘        │
                        │ (YES)          │
                        ▼                │
              ┌─────────────────┐  88    │
              │  SEARCH KEY ?   │───NO───────────────┐
              └─────────────────┘        │           ▼
                        │ YES            │   ┌──────────────┐  98
                        ▼                │   │  PROCESSING  │
              ┌─────────────────┐        │   │   FOR THE    │
              │ WAIT INPUT OF   │  89-1   │   │ ENTERED CODE │
              │ CODE TO BE      │        │   └──────────────┘
              │ SEARCHED AND    │        │           │
              │ NUMBER "N" SET  │        │           │
              └─────────────────┘        │           │
                        │                │           │
                        ▼                │           │
              ┌─────────────────┐  90    │           │
              │   KEY INPUT ?   │───NO───┘           │
              └─────────────────┘                    │
                        │ YES                         │
                        ▼                             │
              ┌─────────────────┐  91                 │
              │ SEARCH CODE     │───NO──┐             │
              │ INPUT ?         │       ▼             │
              └─────────────────┘   ┌──────────┐  97  │
                        │ YES       │  ERROR   │      │
                        ▼           │PROCESSING│      │
              ┌─────────────────┐92 └──────────┘      │
              │ STORE SEARCH    │                     │
              │ CODE            │                     │
              └─────────────────┘                     │
                        │                             │
                        ▼                             │
              ┌─────────────────┐  93-1               │
    YES───────│ TEXT CODE ON    │                     │
       │      │ CURRENT ADDRESS │                     │
       │      │ EQUAL TO "N"TH  │                     │
       │      │ SEARCH CODE ?   │                     │
       │      └─────────────────┘                     │
       │               │ NO                           │
       │               ▼                              │
       │      ┌─────────────────┐  94                 │
       │      │ ATTRIBUTE SET   │                     │
       │      │ TO EACH         │                     │
       │      │ CHARACTER       │                     │
       │      │ ACCORDING TO    │                     │
       │      │ THE CHARACTER   │                     │
       │      │ MODIFYING BIT   │                     │
       │      └─────────────────┘                     │
       │               │                              │
       │               ▼                              │
       │      ┌─────────────────┐  95                 │
       │      │ ADD 1 TO        │                     │
       │      │ CURRENT TEXT    │                     │
       │      │ ADDRESS         │                     │
       │      └─────────────────┘                     │
       │                                              │
       ▼                                              │
┌─────────────┐  96                                   │
│    SAVE     │                                       │
│ THE ADDRESS │                                       │
└─────────────┘                                       │
```

# FIG. 4(A)

A B C 24 22 D E F G H 24 I

# FIG. 4(B)

A B C 24 D E F G H 24 22 I

# FIG. 4(C)

A B C 24 D E F G H 25 24 22 I

# FIG. 4(D)

A B C 24 D E F G H 26 24 22 I

## FIG. 4(E)

$$A \quad B \quad C \quad \underline{\phantom{x}} \quad D_0 \; E_0 \; F_0 \; G_0 \; H_0 \boxed{\underline{\phantom{x}}} \; I$$

22

## FIG. 4(F)

$$A \quad B \quad C \quad \underline{\phantom{x}} \quad D^2 \; E^2 \; F^2 \; G^2 \; H^2 \boxed{\underline{\phantom{x}}} \; I$$

22

## FIG. 4(G)

$$A \quad B \quad C \quad \underline{\phantom{x}} \quad \cancel{D \; E \; F \; G \; H} \boxed{\underline{\phantom{x}}} \; I$$

22

# F I G . 5 (A)

22

A B . C _ |D| E F G H . I J

24

# F I G . 5 (B)

A B C _ D E F G H |.| I J

24           25        22

# F I G . 5 (C)

22

A B C _ |D| E F G H . I J

24        27

# FIG. 5(D)

A B C  ‿  D E F G H . I [J]  ⌒22

24        27

# FIG. 6(A)

⌒22
A B ‿ [C] D E F G H ‿ C D E I

24            24

# FIG. 6(B)

22
A B ‿ C D E F G H ‿ [C] D E I

24  25            24